(19) Europäisches Patentamt
European Patent Office
Office européen des brevets

(11) Publication number: 0 005 009 A1

# (12) EUROPEAN PATENT APPLICATION

(21) Application number: 79300430.0

(22) Date of filing: 19.03.79

(51) Int. Cl.$^2$: C 09 K 5/00
F 24 J 3/00

(30) Priority: 26.04.78 GB 1657278

(43) Date of publication of application: 31.10.79 Bulletin 79/22

(84) Designated Contracting States: BE CH DE FR GB IT LU NL SE

(71) Applicant: EUROPEAN ATOMIC ENERGY COMMUNITY (EURATOM)
Batiment Jean Monnet Plateau du Kirchberg Bôite Postale 1907
Luxembourg(LU)

(72) Inventor: Reiter, Friedrich
Via dei Pini
I-21027 Ispra (VA)(IT)

(74) Representative: Baverstock, Michael George Douglas et al,
BOULT, WADE & TENNANT 27 Furnivalstreet
London, EC4A 1PQ(GB)

## (54) A method of storing thermal energy and an apparatus for collecting and storing thermal energy.

(57) Method of storing thermal energy and apparatus for collecting and storing it, particularly solar energy. The method makes use of a mixture of two chemical salts which above a transformation temperature combine endothermically to yield a mixture of two different salts, which different salts combine exothermically to regenerate the original mixture of salts below the transformation temperature.

The thermal storage apparatus for the collection and storage of radiant solar thermal energy makes use of a heat transfer fluid in combination with a heat-insulated container containing a mixture of two suitable chemical salts. A particular salt pair described is:

$2KNO_3 + Ba(OH)_2.8H_2O\ 2KOH.H_2O + BaNO_3 + 6H_2O$

EP 0 005 009 A1

Croydon Printing Company Ltd.

0005009

TITLE MODIFIED
see front page

"STORAGE OF THERMAL ENERGY"

The invention relates to the storage of thermal energy, particularly solar energy, using a combination of chemical compounds.

It is known to store thermal energy using isothermic containers. If water is used as a storage material it can be heated by, for example, solar energy to, for example, 90°C and then stored for use when no sunlight is available. If the water is then cooled after storage to, for example, 40°C it will be clear that 50 kcal/$dm^3$ thermal energy can be stored. If used to cover the heat demands of a single family house the storage volume of water would need to be about 200 $m^3$. This is a very large volume of water and therefore other materials have been tested with a view to finding materials which can store more thermal energy per $dm^3$.

The solar heat storage media which have been proposed and used up to now are water, rocks, salt hydrates, paraffins and other organic compounds. In water and rocks only the specific heat can be stored, while in some salt hydrates, paraffins and other organic compounds the latent heat of fusion and the specific heat can both be used for heat storage.

If a temperature difference of 40°C between the initial and final state of the storage system is considered, the storage capacities of some of these materials are:

| | | |
|---|---|---|
| Rocks | 10 kcal/$dm^3$ | |
| Water | 40 kcal/$dm^3$ | |
| Glauber's salt | 115 kcal/$dm^3$ | (85 + 30) |
| Paraffins and other organic compounds | 70 kcal/$dm^3$ | (40 + 30) |

The values given in parentheses, are the respective contributions of the enthalpies of reaction and the specific heats to the total heat storage capacities of the materials.

Glauber's salt is the most used and most investigated salt hydrate because of its high heat of fusion and its low cost (see, for example, A. ABHAT et al V.D.I. Berichte Nr. 288 (1977) P. 97-104, and Th. JUST D.F.V.1.R. Nachrichten, Febr. 1977 Heft 20, P. 834-842).

It has now been found however that the afore-mentioned materials can be replaced by systems of chemical compounds which react endothermically above a certain transformation temperature and which show a reverse reaction which is exotheric below that temperature.

According to the present invention there is provided a method of storing thermal energy which method comprises heating from a lower temperature to a higher temperature a mixture of a first salt with a second salt the said mixture of first and second salts having a transformation temperature between the said lower and higher temperatures above which transformation temperature the anions and cations of said first salt combine endothermically respectively with the cations and anions of said second salt to form a mixture of a third salt and a fourth salt, the anions and cations of said third salt combining exothermically below said transformation temperature respectively with the cations and anions of said fourth salt so as to regenerate said first and second salts.

The present invention also provides apparatus for collecting and storing thermal energy which apparatus comprises means for heating a heat-transfer fluid using radiant solar thermal energy, means for conducting said

heat-transfer fluid into heat-exchanging relationship with the contents of a heat-insulated container, and a heat-insulated container containing said contents, said contents comprising a mixture of first and second salts having a transformation temperature between the maximum and minimum temperatures at which said apparatus is to operate, above which transformation temperature the anions and cations of said first salt combine endothermically respectively with the cations and anions of said second salt to form a mixture of a third salt and fourth salt, the anions and cations of said third salt combining exothermically below said transformation temperature respectively with the cations and anions of said fourth salt so as to regenerate said first and second salts.

It will be understood that the invention also includes within its scope a container containing a mixture of a first salt and a second salt, said mixture having a transformation temperature above which the anions and cations of said first salt combine endothermically respectively with the cations and anions of said second salt to form a mixture of a third salt and fourth salt, the anions and cations of said third salt combining exothermically below said transformation temperature respectively with the cations and anions of said fourth salt so as to regenerate said first and second salts, the container being provided with instructions to use the contents as a heat storage medium.

A transformation temperature between 30 and 70°C is preferred. Also, the reaction enthalpy and the latent heat storage capacity of the heat storage system should be as large as possible.

In the proposed heat storage system in accordance with this invention a conventional heat storage tank with indirect contact or direct contact between heat transfer liquid and storage material would conveniently

be used.

The heat storage material of this invention is composed of a pair of salts with different cations (A,C) and anions (B,D). According to the phase rule of Gibbs, this salt pair will be transformed into the reciprocal salt pair at a certain transformation temperature:

$$AB + CD \longrightarrow AD + CB$$

The salt pair which is the stable pair at any given temperature is the one which has the smaller product of solubility products. If the product of $K_{AB}$ and $K_{CD}$ (solubility products) and the corresponding product for the reciprocal salt pair AD and CB, are both plotted as a function of temperature, the intersection of the two curves can be expected to give the transition temperature of pair stability. Thus it can readily be determinded whether a particular salt pair will have a suitable transformation temperature.

One such salt pair is:

$$2KNO_3 + Ba(OH)_2.8H_2O \quad 2KOH.H_2O + BaNO_3 + 6H_2O$$

The enthalpy of reaction calculated from the enthalpies of formation of the components is 160 kcal/$dm^3$ and the transformation temperature determined by the solubility criterion is 65°C. This reciprocal salt pair, which is formed by the cations $K^+$ and $Ba^{++}$ and the anions $NO_3^-$ and $OH^-$, can store 190 kcal/$dm^3$ (enthalpy of reation 160 kcal/$dm^3$ and specific heat 30 kcal/$dm^3$), when a temperature difference of 40°C is assumed and when the reaction runs under optimal conditions. The latent heat storage capacity of this system (160 kcal/$dm^3$) can therefore be considered to be approximately twice that of Glauber's salt (85 kcal/$dm^3$) which is at present considered to be one of the most favourable heat storage systems for domestic applications.

The optimum transformation temperature of a latent heat storage material for domestic applications lies between 45°C and 70°C. The only hitherto-known

promising salt hydrate system with a transformation temperature in this temperature range is $Na_2S_2O_3.5H_2O$ with a transformation temperature of 48°C and an enthalpy of fusion of about 80 kcal/dm$^3$. In the temperature range from 45°C up to 70°C there are however the melting points of several organic compounds, but the latent heats of fusion of these substances are only between 35 and 40 kcal/dm$^3$. This is about half of the corresponding values of salt hydrate systems.

The double conversion of reciprocal salt pairs therefore offers new possibilities in short term solar energy storage at low temperatures.

Some other specific salt pairs having advantageous characteristics are:-

| Salt pair | Transition Temp. °C | Enthalpy of reaction Kcal/dm$^3$ |
|---|---|---|
| $2CsBr + (NH_4)_2SO_4$ | 49 | 320 |
| $2KNO_2 + Ba(OH)_2.8H_2O$ | 77 | 132 |
| $NaCO_3.10\ H_2O + 2KF.4H_2O$ | 5 | 95 |
| $2NaNO_3 + Ba(OH)_2.8H_2O$ | 72 | 160 |
| $NaOH.H_2O + KBr$ | 52 | 99 |
| $2LiNO_3.3H_2O + (NH_4)_2SO_4$ | 28 | 257 |
| $2LiNO_2.H_2O + Na_2SO_4.10\ H_2O$ | 26 | 103 |
| $LiNO_2.1/2H_2O + NaBr$ | 93 | 107 |
| $2LiNO_3.1/2H_2O + SrCl_2.6H_02$ | 44 | 100 |
| $2LiNO_2.H_2O + Ba(OH)_2.8H_2O$ | 55 | 105 |
| $2LiF + BaCl_2.H_2O$ | 120 | 227 |
| $2LiF + Ba(OH)_2.8H_2O$ | 48 | 106 |

CLAIMS:

1. A method of storing thermal energy which method comprises heating from a lower temperature to a higher temperature a mixture of a first salt with a second salt the said mixture of first and second salts having a transformation temperature between the said lower and higher temperatures above which transformation temperature the anions and cations of said first salt combine endothermically respectively with the cations and anions of said second salt to form a mixture of third salt and a fourth salt, the anions and cations of said third salt combining exothermically below said transformation temperature respectively with the cations and anions of said fourth salt so as to regenerate said first and second salts.

2. A method as claimed in claim 1 wherein the mixture of first and second salts is heated by bringing a hot heat exchange fluid into heat-exchanging relationship with the mixture.

3. A method as claimed in claim 1 or claim 2 wherein the heat for heating the said mixture of first and second salts is obtained from a solar radiant thermal energy collector.

4. A method as claimed in any one of the preceding claims wherein said transformation temperature is in the range from 30°C to 70°C.

5. A method as claimed in claim 4 wherein the transformation temperature is in the range from 45°C to 70°C.

6. A method as claimed in any one of the preceding claims wherein the enthalpy of the reaction between the first and second salts is greater than 85 $kcal/dm^3$.

7. A method as claimed in claim 1 wherein the first salt pair is potassium nitrate and hydrated barium hydroxide.

8. An apparatus for collecting and storing thermal energy which apparatus comprises means for heating a heat-transfer fluid using radiant solar thermal energy, means for conducting said heat-transfer fluid into heat-exchanging relationship with the contents of heat-insulated container, and a heat-insulated container containing said contents, said contents comprising a mixture of first and second salts having a transformation temperature between the maximum and minimum temperatures at which said apparatus is to operate, above which transformation temperature the anions and cations of said first salt combine endothermically respectively with the cations and anions of said second salt to form a mixture of a third salt and a fourth salt, the anions and cations of said third salt combining exothermically below said transformation temperature respectively with the cations and anions of said fourth salt so as to regenerate said first and second salts.

9. A container containing a mixture of a first salt and a second salt, said mixture having a transformation temperature above which the anions and cations of said first salt combine endothermically respectively with the

cations and anions of said second salt to form a mixture of a third salt and fourth salt, the anions and cations of said third salt combining exothermically below said transformation temperature respectively with the cations and anions of said fourth salt so as to regenerate said first and second salts, the container being provided with instructions to use the contents as a heat storage medium.

MGB/SJW/SA/EA030

European Patent Office

# EUROPEAN SEARCH REPORT

0005009

Application number

EP 79 30 0430

| Category | Citation of document with indication, where appropriate, of relevant passages | Relevant to claim | CLASSIFICATION OF THE APPLICATION (Int. Cl.²) |
|---|---|---|---|
| | **DOCUMENTS CONSIDERED TO BE RELEVANT** | | |
| A | DE - A - 2 550 106 (HITACHI)<br>* Claim 1 *<br>-- | 1 | C 09 K 5/00<br>F 24 J 3/00 |
| A | GB - A - 847 984 (BABCOCK & WILCOX)<br>* Claim 1 *<br>-- | 1 | |
| A | DE - A - 2 460 606 (TELLUS)<br>* Claim 1 *<br>-- | 1 | TECHNICAL FIELDS SEARCHED (Int.Cl.²) |
| A | DE - B - 1 159 902 (MINE SAFETY)<br>* Claim 1 *<br>---- | 1 | C 09 K 5/00<br>5/02<br>5/06<br>F 24 J 3/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 13-06-1979 | NICOLAS |

EPO Form 1503.1 06.78